# EUROPÄISCHE PATENTSCHRIFT

(11) **EP 3 244 076 B1**
(45) Veröffentlichungstag und Bekanntmachung des Hinweises auf die Patenterteilung: **08.04.2020**
(21) Anmeldenummer: 17169076.1
(22) Anmeldetag: 02.05.2017
(51) Int. Cl.: B60N 3/02, B61D 37/00, F16B 7/04, F16B 2/06

(54) **VERBINDUNGSELEMENT ZUR VERBINDUNG VON HALTESTANGEN IN EINEM BUS**
CONNECTING ELEMENT FOR CONNECTING HANDRAILS IN A BUS
ÉLÉMENT DE LIAISON DE BARRES DE RETENUE DANS UN BUS

(30) Priorität: 13.05.2016 DE 102016005961
(43) Veröffentlichungstag der Anmeldung: 15.11.2017
(73) Patentinhaber: MAN Truck & Bus SE, 80995 München (DE)
(72) Erfinder: Schmerbeck, Franz, 94522 Wallersdorf (DE); Kittel, Ralf, 80939 München (DE)
(74) Vertreter: v. Bezold & Partner Patentanwälte - PartG mbB

(56) Entgegenhaltungen:
- EP-A2- 1 607 638
- DE-A1- 2 711 993
- US-A1- 2011 049 868
- US-B1- 6 343 891
- US-B1- 9 200 654

## Beschreibung

Die Erfindung betrifft ein Fahrzeug zur Personenbeförderung, insbesondere Bus, mit einer Haltestangenanordnung aufweisend eine erste Haltestange, eine zweite Haltestange und ein Verbindungselement.

Ein Verbindungselement ist aus DE 29 03 126 A1 bekannt und weist zunächst ein Vorderteil und ein Hinterteil auf, die zwischen sich eine vertikale Haltestange einschließen können. Hierzu weisen das Vorderteil und das Hinterteil jeweils eine Aufnahmeschale auf, wobei die beiden Aufnahmeschalen des Vorderteils und des Hinterteils einander zugewandt sind und zusammen eine Aufnahmebohrung für die vertikale Haltestange bilden. Darüber hinaus weist das Vorderteil an seiner dem Hinterteil abgewandten Vorderseite eine weitere Aufnahmeschale zur Aufnahme einer horizontalen Haltestange auf. Bei der Montage wird auf das Vorderteil ein Aufsetzteil aufgesetzt, das seinerseits innen eine Aufnahmeschale aufweist, wobei die beiden Aufnahmeschalen des Vorderteils und des Aufsetzteils zusammen eine Aufnahmebohrung für die horizontale Haltestange bilden. Bei der Montage werden das Hinterteil, das Vorderteil und das Aufsetzteil durch eine einzige Schraubverbindung miteinander verbunden, wobei die Schraubverbindung durch das Aufsetzteil, das Vorderteil und das Hinterteil durchgeht.

Die DE 27 11 993 A1 offenbart eine Geländer- und Haltestangenanordnung für Fahrzeuge des öffentlichen Verkehrs. Ein Klemmteil besteht aus zwei Elementen, von denen jedes zwei halbkreisförmig ausgesparte Abschnitte hat, die rechtwinklig zueinander angeordnet sind. Die beiden Elemente sind miteinander durch Befestigungsmittel lösbar verbindbar, sodass jeweils die beiden entsprechenden halbkreisförmigen Abschnitte so zusammenwirken, dass zwei rohrförmige Abschnitte gebildet werden, die im rechten Winkel zueinander angeordnet sind. Ein rohrförmiges Stangenelement hat einen Außendurchmesser, der dem Innendurchmesser der rohrförmigen Abschnitte des Klemmteils entspricht und in den rohrförmigen Abschnitt für ein Festklemmen darin mittels der Befestigungsmittel einpassbar ist.

Nachteilig an diesem bekannten Verbindungselement ist die relativ schwierige Montage, da eine einzige Schraubverbindung vorgesehen ist, um das Vorderteil mit dem Hinterteil und das Aufsetzteil mit dem Vorderteil zu verbinden und zusammenzuspannen. Alle Teile des Verbindungselements müssen deshalb vor dem Anziehen der Schraubverbindung in der gewünschten Position gehalten werden, was schwierig ist.

Aus dem Stand der Technik sind weitere Verbindungselemente bekannt. Zum Beispiel offenbart die US 2011/0049868 A1 ein Verbindungselement für ein Schlagzeug, die US 6,343,891 B1 offenbart ein Verbindungselement für ein Fahrrad, die EP 1 607 638 A2 offenbart ein Verbindungselement für ein Gerüstsystem und die US 9,200,654 B1 offenbart eine Verbindungselement für Verkehrslenkungseinrichtungen.

Der Erfindung liegt deshalb die Aufgabe zugrunde, ein entsprechend verbessertes Verbindungselement zu schaffen.

Diese Aufgabe wird durch ein Fahrzeug mit einem Verbindungselement in einer Haltestangenanordnung gemäß dem Hauptanspruch gelöst.

Das erfindungsgemäße Verbindungselement weist zunächst in Übereinstimmung mit dem Stand der Technik ein Hinterteil auf, das bei der Montage hinter einer ersten, vorzugsweise vertikalen Stange angeordnet wird und an seiner Vorderseite eine Aufnahmeschale zur Aufnahme der ersten Stange aufweist.

Darüber hinaus weist das erfindungsgemäße Verbindungselement in Übereinstimmung mit dem Stand der Technik ein Vorderteil auf, das im montierten Zustand vor der ersten, vorzugsweise vertikalen Stange angeordnet ist und an seiner Hinterseite eine hintere Aufnahmeschale zur Aufnahme der ersten Stange aufweist. Die einander zugewandten Aufnahmeschalen des Hinterteils einerseits und des Vorderteils andererseits bilden also im montierten Zustand eine Aufnahmebohrung für die erste, vorzugsweise vertikale Stange.

Das Vorderteil des erfindungsgemäßen Verbindungselements weist darüber hinaus auf seiner dem Hinterteil abgewandten Vorderseite eine weitere, vordere Aufnahmeschale auf, um die zweite, vorzugsweise horizontale Stange aufzunehmen.

Ferner weist das erfindungsgemäße Verbindungselement in Übereinstimmung mit dem Stand der Technik ein erstes Befestigungselement (z. B. Befestigungsschrauben) auf, um das Vorderteil an dem Hinterteil zu befestigen und damit die erste, vorzugsweise vertikale Stange zwischen dem Vorderteil und dem Hinterteil einzuspannen.

Weiterhin umfasst das erfindungsgemäße Verbindungselement ein Aufsetzteil zum Aufsetzen auf das Vorderteil, wobei das Aufsetzteil auf der dem Vorderteil zugewandten Seite eine Aufnahmeschale zur Aufnahme der zweiten, vorzugsweise horizontalen Stange aufweist. Die beiden Aufnahmeschalen an dem Aufsetzteil einerseits und an dem Vorderteil andererseits bilden zusammen also eine Aufnahmebohrung für die zweite, vorzugsweise horizontale Stange.

Das erfindungsgemäße Verbindungselement zeichnet sich nun dadurch aus, dass die Verbindung des Vorderteils, des Hinterteils und des Aufsetzteils nicht - wie bei DE 29 03 126 A1 - durch ein einziges Befestigungselement erfolgt. Vielmehr weist das erfindungsgemäße Verbindungselement zusätzlich ein separates zweites Befestigungselement (z. B. eine weitere Befestigungsschraube) auf, um das Aufsetzteil an dem Vorderteil zu befestigen, wobei das zweite Befestigungselement unabhängig von dem ersten Befestigungselement befestigt und gelöst werden kann.

Das erfindungsgemäße Verbindungselement weist also zwei Befestigungselemente auf, wobei das erste Befestigungselement (z. B. zwei Befestigungsschrauben) eine mechanische Verbindung herstellt zwischen dem Vorderteil und dem Hinterteil, während das zweite Befestigungselement (z. B. eine einzige Befestigungsschraube) eine Verbindung herstellt zwischen dem Aufsetzteil und dem Vorderteil. Dadurch wird die Montage des erfindungsgemäßen Verbindungselements wesentlich erleichtert. Zuerst können nämlich das Vorderteil und das Hinterteil an der vertikalen Stange montiert und mittels des ersten Befestigungselements miteinander verbunden werden. Das Vorderteil und das Hinterteil sind dann bereits an der vertikalen Stange fixiert und müssen nicht mehr manuell gehalten werden. Anschließend wird dann das Aufsetzteil auf das Vorderteil aufgesetzt, wobei die horizontale Stange zwischen dem Aufsetzteil und dem Vorderteil angeordnet ist. Schließlich wird dann das zweite Befestigungselement fixiert.

In einer Variante der Erfindung ist die Aufnahmebohrung zwischen dem Vorderteil und dem Hinterteil eine Sackbohrung. Dies bedeutet vorzugsweise, dass die von oben kommende vertikale erste Stange nicht durch das Verbindungselement hindurchgeht, sondern in dem Verbindungselement endet. Es besteht jedoch alternativ auch die Möglichkeit, dass die von unten kommende vertikale Stange in dem Verbindungselement endet.

Diese Erfindungsvariante mit einer Sackbohrung zwischen dem Vorderteil und dem Hinterteil ermöglicht eine T-förmige Verbindung einer vertikalen Haltestange mit einer horizontalen Haltestange.

Bei dieser Erfindungsvariante mit einer Sackbohrung für die erste, vorzugsweise vertikale Stange kann das Hinterteil einen Boden für die Sackbohrung der ersten Stange bilden. Beispielsweise kann dieser Boden an dem Hinterteil einstückig angeformt sein. Es besteht jedoch alternativ auch die Möglichkeit, dass es sich bei dem Boden um ein separates Bauteil handelt, das an dem Hinterteil oder an dem Vorderteil angebracht ist und die Aufnahmebohrung einseitig verschließt. Hierbei ist zu erwähnen, dass der Boden den lichten Querschnitt der Sackbohrung für die erste, vorzugsweise vertikale Stange vorzugsweise im Wesentlichen vollständig ausfüllt.

In einer anderen Erfindungsvariante ist die Aufnahmebohrung zwischen dem Vorderteil und dem Hinterteil dagegen eine Durchgangsbohrung, was eine Verbindung von sich kreuzenden Haltestangen ermöglicht.

Weiterhin ist zu erwähnen, dass die Aufnahmebohrung zwischen dem Vorderteil und dem Aufsetzteil für die zweite, vorzugsweise horizontale Stange eine Sackbohrung sein kann. Auch dies ermöglicht wieder eine T-förmige Anordnung von Stangen, die in dem Verbindungselement miteinander verbunden werden.

In dieser Erfindungsvariante bildet das Aufsetzteil vorzugsweise eine Seitenwand für die Sackbohrung, d. h,. der Boden der Sackbohrung wird durch die Seitenwand gebildet. Auch hierbei kann die Seitenwand an dem Aufsetzteil einstückig angeformt sein, wobei alternativ auch die Möglichkeit besteht, dass die Seitenwand ein separates Bauteil ist. In jedem Fall ist es vorteilhaft, wenn die Seitenwand an dem Aufsetzteil den lichten Querschnitt der Sackbohrung im Wesentlichen vollständig ausfüllt.

Zu dieser Erfindungsvariante ist zu erwähnen, dass die horizontale Stange von rechts kommen kann und dann in dem Verbindungselement endet. Alternativ besteht die Möglichkeit, dass die horizontale Stange von links kommt und dann in dem Verbindungselement endet.

Es wurde bereits vorstehend erwähnt, dass die Verbindung zwischen dem Vorderteil und dem Hinterteil einerseits und die Verbindung zwischen dem Aufsetzteil und dem Vorderteil andererseits durch separate Befestigungselemente erfolgt, was die Montage wesentlich vereinfacht. Das erste Befestigungselement zur Verbindung des Vorderteils mit dem Hinterteil weist vorzugsweise zwei Schrauben, zwei Durchgangsbohrungen in dem Vorderteil und zwei Gewindebohrungen in dem Hinterteil auf, wobei die beiden Schrauben vorzugsweise auf gegenüber liegenden Seiten der Aufnahmebohrung für die erste Stange verlaufen. Die Befestigungsschrauben stützen sich also mit ihrem Schraubenkopf an einer Durchgangsbohrung in dem Vorderteil ab und sind mit ihren freien Enden in zwei Gewindebohrungen in dem Hinterteil eingeschraubt. Auf diese Weise ist es möglich, das Vorderteil und das Hinterteil zusammenzuspannen, wodurch eine reibschlüssige Verbindung zwischen Vorderteil und Hinterteil einerseits und der ersten, vorzugsweise vertikalen Stange andererseits hergestellt werden kann.

Bei dem zweiten Befestigungselement zur Befestigung des Aufsetzteils an dem Vorderteil handelt es sich dagegen vorzugsweise um eine einzige Schraube, die sich mit ihrem Schraubenkopf an einer Durchgangsbohrung in dem Aufsetzteil abstützt und in eine Gewindebohrung in dem Vorderteil eingeschraubt wird. Diese Befestigungsschraube ermöglicht es, das Aufsetzteil auf das Vorderteil aufzupressen, wodurch eine reibschlüssige Verbindung zwischen Aufsetzteil und Vorderteil einerseits und der zweiten, vorzugsweise horizontalen Stange andererseits hergestellt wird.

Hierbei ist zu erwähnen, dass das Aufsetzteil im montierten Zustand vorzugsweise das erste Befestigungselement (z. B. zwei Befestigungsschrauben) abdeckt, welches das Vorderteil an dem Hinterteil befestigt. Das erste Befestigungselement ist also im montierten Zustand nicht mehr sichtbar, da es dann von dem Aufsetzteil abgedeckt wird.

Hinsichtlich der Anordnung der Stangen ist zu erwähnen, dass es sich bei der ersten Stange vorzugsweise um eine Stange handelt, die im Wesentlichen vertikal verläuft. Bei der zweiten Stange handelt es sich dagegen vorzugsweise um eine Stange, die im Wesentlichen horizontal verläuft. Die beiden Stangen können einander hierbei kreuzen oder T-förmig zusammenlaufen.

Es wurde bereits vorstehend erwähnt, dass Vorderteil und Hinterteil bzw. Aufsetzteil und Vorderteil zusammengepresst werden können, um eine reibschlüssige Verbindung mit der jeweiligen Stange herzustellen, was eine bestimmte Anpresskraft erfordert. Hierzu ist zwischen dem Vorderteil und dem Hinterteil und zwischen dem Aufsetzteil und dem Vorderteil vorzugsweise ein Luftspalt eingeschlossen, der es ermöglicht, eine ausreichend große Anpresskraft auf die jeweilige Stange auszuüben, ohne dass Vorderteil und Hinterteil bzw. Aufsetzteil und Vorderteil zusammenstoßen.

Ferner ist zu erwähnen, dass das Hinterteil, das Vorderteil und/oder das Aufsetzteil aus Metall bestehen können, insbesondere aus Stahl oder einer Aluminiumlegierung.

Zu den vorstehend bereits erwähnten Aufnahmeschalen ist zu bemerken, dass es sich hierbei vorzugsweise um Halbschalen handelt, welche die erste bzw. die zweite Stange im Wesentlichen über den halben Umfang umfassen, d. h. über einen Umfangswinkel von 170°-190° oder 175°-185°.

Bei der erfindungsgemäßen Haltestangenanordnung können die Haltestangen T-förmig oder kreuzförmig zusammenlaufen und miteinander verbunden werden.

Schließlich ist zu erwähnen, dass die Erfindung Schutz beansprucht für ein komplettes Fahrzeug zur Personenbeförderung (z. B. Bus) mit einer erfindungsgemäßen Haltestangenanordnung.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Erfindung näher erläutert. Es zeigen:
- Figur 1: eine Perspektivansicht einer erfindungsgemäßen Haltestangenanordnung in einem Bus,
- Figur 2: eine Perspektivansicht eines Verbindungselements der Haltestangenanordnung aus Figur 1 zur Verbindung von kreuzenden Haltestangen,
- Figur 3: eine Perspektivansicht eines Verbindungselements der Haltestangenanordnung aus Figur 1 zur Verbindung von T-förmig zusammenlaufenden Haltestangen,
- Figur 4: eine Abwandlung von Figur 3,
- Figur 5: eine Abwandlung von Figur 3,
- Figur 6: eine Querschnittsansicht des Verbindungselements aus Figur 2,
- Figur 7: eine Explosionsdarstellung des Verbindungselements aus Figur 2,
- Figur 8: eine Perspektivansicht einer Abwandlung des Hinterteils des Verbindungselements,
- Figur 9: eine Perspektivansicht einer Abwandlung des Aufsetzteils, sowie
- Figur 10: eine Perspektivansicht einer anderen Abwandlung des Aufsetzteils.

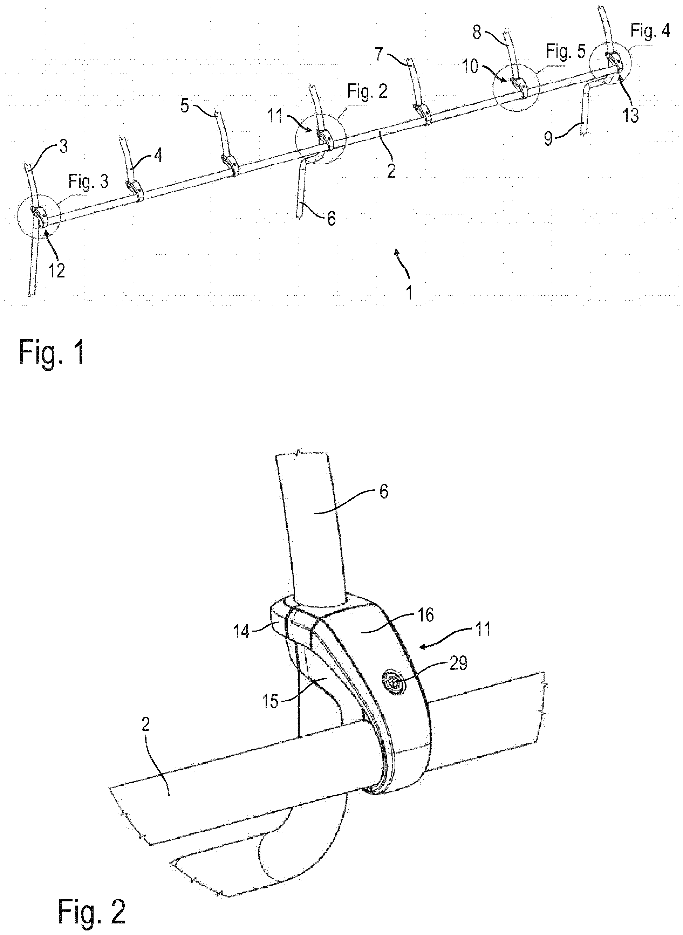

Figur 1 zeigt eine Perspektivansicht einer erfindungsgemäßen Haltestangenanordnung 1, die beispielsweise in einem Bus eingesetzt werden kann.

Die Haltestangenanordnung 1 umfasst zunächst eine horizontale Haltestange 2 und mehrere vertikale Haltestangen 3-9, die jeweils mit der horizontalen Haltestange 2 verbunden sind.

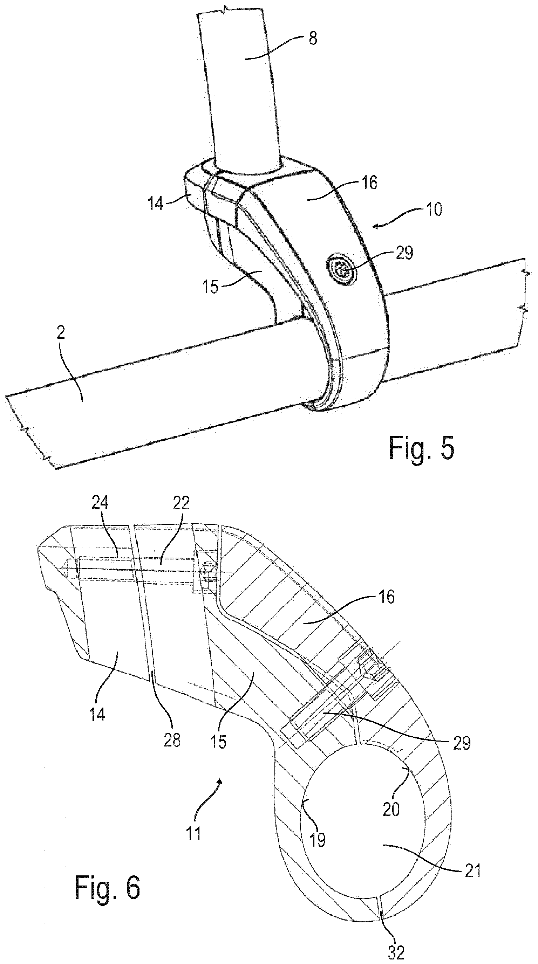

Die vertikalen Haltestangen 4, 5, 7 und 8 kommen hierbei von oben und enden an der horizontalen Haltestange 2 in einem Verbindungselement 10, das in Figur 5 dargestellt ist und noch detailliert beschrieben wird.

Die vertikale Haltestange 6 geht dagegen von oben nach unten durch und wird durch ein Verbindungselement 11 mit der horizontalen Haltestange 2 verbunden, wobei das Verbindungselement 11 in den Figuren 2, 6 und 7 dargestellt ist und noch eingehend beschrieben wird. Die Haltestange 6 kreuzt sich also mit der Haltestange 2.

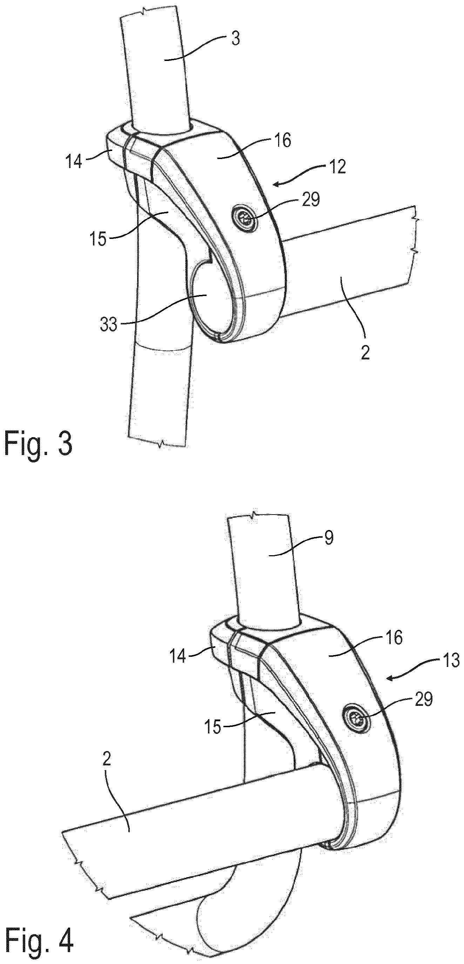

Die vertikalen Haltestangen 3 und 9 gehen ebenfalls von oben nach unten durch, jedoch sind die Haltestangen 3, 9 jeweils an den Enden der horizontalen Haltestange 2 angeordnet, so dass die Haltestangen 3, 9 mit der horizontalen Haltestange 2 eine T-förmige Verbindung bilden. Hierzu ist jeweils ein Verbindungselement 12 bzw. 13 vorgesehen. Das Verbindungselement 12 ist in Figur 3 dargestellt, während das Verbindungselement 13 in Figur 4 dargestellt ist.

Figur 2 zeigt eine Perspektivansicht des Verbindungselements 11, welches die vertikale Haltestange 6 mit der horizontalen Haltestange 2 verbindet.

Das Verbindungselement 11 besteht im Wesentlichen aus einem Hinterteil 14, einem Vorderteil 15 und einem Aufsetzteil 16.

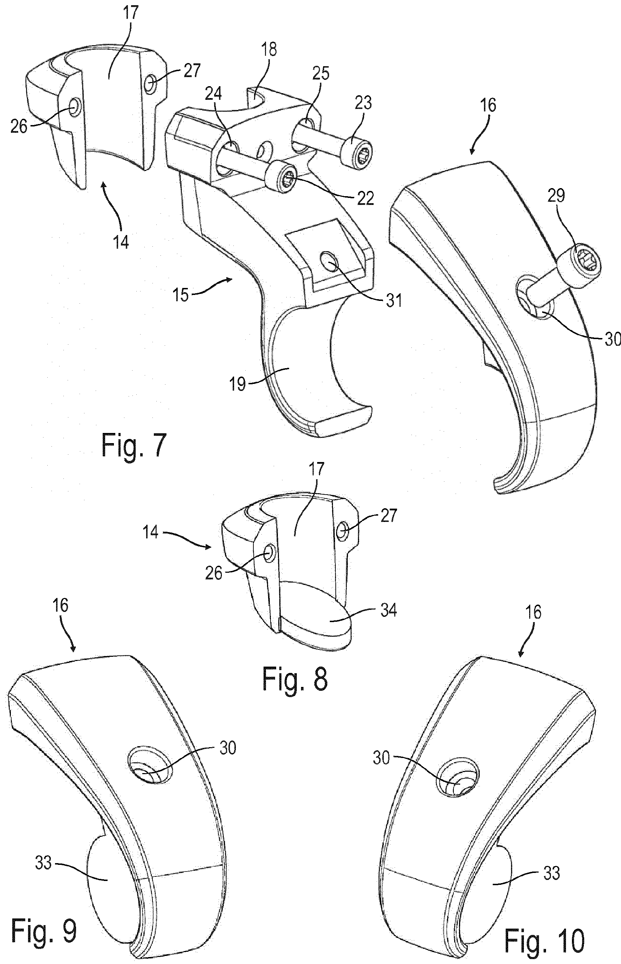

Das Hinterteil 14 und das Vorderteil 15 schließen zwischen sich die vertikale Haltestange 6 ein. Hierzu weisen das Hinterteil 14 und das Vorderteil 15 jeweils eine Aufnahmeschale 17, 18 (vgl. Figur 7) auf, wobei die beiden Aufnahmeschalen 17, 18 zusammen eine Aufnahmebohrung für die vertikale Haltestange 6 bilden.

Das Aufsetzteil 16 und das Vorderteil 15 schießen zwischen sich die horizontale Haltestange 2 ein und weisen hierzu jeweils eine Aufnahmeschale 19 bzw. 20 auf, wobei die beiden Aufnahmeschalen 19, 20 zusammen eine Aufnahmebohrung 21 für die horizontale Haltestange 2 bilden.

Die Aufnahmebohrung für die vertikale Haltestange 6 und die Aufnahmebohrung 21 für die horizontale Haltestange 2 sind hierbei jeweils als Durchgangsbohrungen ausgebildet, da die beiden Haltestangen 2, 6 einander kreuzen.

Zur mechanischen Verbindung zwischen dem Vorderteil 15 und dem Hinterteil 14 sind zwei Befestigungsschrauben 22, 23 vorgesehen, die durch zwei Durchgangsbohrungen 24, 25 in dem Vorderteil 15 hindurchgeführt sind und in zwei Gewindebohrungen 26, 27 in dem Hinterteil 14 eingeschraubt werden. Hierbei ist zu beachten, dass zwischen dem Vorderteil 15 und dem Hinterteil 14 ein Luftspalt 28 liegt (vgl. Figur 6). Dies ist wichtig, damit die Befestigungsschrauben 22, 23 die beiden Aufnahmeschalen 17, 18 in dem Vorderteil 15 bzw. dem Hinterteil 14 zusammenpressen können, um eine reibschlüssige Verbindung mit der vertikalen Haltestange 6 herzustellen. Der Luftspalt 28 verhindert also, dass das Vorderteil 15 unmittelbar mit dem Hinterteil 14 zusammenstößt.

Die mechanische Verbindung zwischen dem Aufsetzteil 16 und dem Vorderteil 15 erfolgt dagegen durch eine einzige Befestigungsschraube 29, die durch eine Durchgangsbohrung 30 in dem Aufsetzteil 16 durchgeführt und in eine Gewindebohrung 31 in dem Vorderteil 15 eingeschraubt wird. Auch hierbei liegt zwischen dem Aufsetzteil 16 und dem Vorderteil 15 ein Luftspalt 32 (vgl. Figur 6), damit die beiden Aufnahmeschalen 19, 20 gegen die Umfangsfläche der horizontalen Haltestange 2 gespannt werden können, um eine reibschlüssige Verbindung herzustellen. Der Luftspalt 32 verhindert also, dass das Aufsetzteil 16 unmittelbar mit dem Vorderteil 15 zusammenstößt.

Die Figuren 3 und 4 zeigen Perspektivansichten der Verbindungselemente 12 bzw. 13, wobei es sich um Abwandlungen des Verbindungselements 11 gemäß Figur 2 handelt. Zur Vermeidung von Wiederholungen wird deshalb auf die vorstehende Beschreibung verwiesen, wobei für entsprechende Einzelheiten dieselben Bezugszeichen verwendet werden.

Eine Besonderheit dieses Ausführungsbeispiels besteht darin, dass die Aufnahmebohrung 21 zwischen dem Aufsetzteil 16 und dem Vorderteil 15 als Sackbohrung ausgebildet ist, die einseitig durch einen Boden 33 begrenzt wird, der an dem Aufsetzteil 16 einstückig angeformt ist. Der Boden 33 bildet hierbei auch eine Seitenwand des Verbindungselements 12 bzw. 13.

Ferner zeigt Figur 5 eine Abwandlung des Verbindungselements 11 gemäß Figur 2. Zur Vermeidung von Wiederholungen wird auch diesbezüglich auf die vorstehende Beschreibung verwiesen, wobei für entsprechende Einzelheiten dieselben Bezugszeichen verwendet werden.

Eine Besonderheit dieses Ausführungsbeispiels besteht darin, dass die Aufnahmebohrung zwischen dem Hinterteil 14 und dem Vorderteil 15 als Sackbohrung ausgebildet ist und unten von einem Boden 34 begrenzt wird, der einstückig an dem Hinterteil 14 angeformt ist (vgl. Figur 8).

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1: Haltestangenanordnung
- 2: Horizontale Haltestange
- 3-9: Vertikale Haltestangen
- 10-13: Verbindungselemente
- 14: Hinterteil
- 15: Vorderteil
- 16: Aufsetzteil
- 17: Aufnahmeschale des Hinterteils
- 18: Aufnahmeschale des Vorderteils
- 19: Aufnahmeschale an der Vorderseite des Vorderteils
- 20: Aufnahmeschale des Aufsetzteils
- 21: Aufnahmebohrung für die horizontale Haltestange
- 22, 23: Befestigungsschrauben
- 24, 25: Durchgangsbohrungen im Vorderteil
- 26, 27: Gewindebohrungen im Hinterteil
- 28: Luftspalt zwischen Vorderteil und Hinterteil
- 29: Befestigungsschraube
- 30: Durchgangsbohrung im Aufsetzteil
- 31: Gewindebohrung im Vorderteil
- 32: Luftspalt zwischen Aufsetzteil und Vorderteil
- 33: Boden
- 34: Boden des Hinterteils

## Patentansprüche

1. Fahrzeug zur Personenbeförderung, insbesondere Bus, mit einer Haltestangenanordnung (1) aufweisend eine erste, vorzugsweise im Wesentlichen vertikale Haltstange (3-9), eine zweite, vorzugsweise im Wesentlichen horizontale Haltestange (2) und ein Verbindungselement (10-13), das die erste Haltestange (3-9) mit der zweiten Haltestange (2) verbindet, wobei das Verbindungselement (10-13) aufweist:
a) ein Hinterteil (14) mit einer Aufnahmeschale (17) zur Aufnahme der ersten Stange (3-9),
b) ein Vorderteil (15) mit
b1) einer dem Hinterteil (14) zugewandten hinteren Aufnahmeschale (18) zur Aufnahme der ersten Stange (3-9), so dass das Vorderteil (15) und das Hinterteil (14) mit ihren einander zugewandten Aufnahmeschalen (17, 18) eine Aufnahmebohrung für die erste Stange (3-9) bilden, und
b2) einer dem Hinterteil (14) abgewandten vorderen Aufnahmeschale (19) zur Aufnahme der zweiten Stange (2),
c) ein erstes Befestigungselement (22-27) zur Befestigung des Vorderteils (15) an dem Hinterteil (14), und
d) ein Aufsetzteil (16) zum Aufsetzen auf das Vorderteil (15) mit einer dem Vorderteil (15) zugewandten Aufnahmeschale (20) zur Aufnahme der zweiten Stange (2), so dass das Aufsetzteil (16) und das Vorderteil (15) mit ihren einander zugewandten Aufnahmeschalen (19, 20) eine Aufnahmebohrung (21) für die zweite Stange (2) bilden,
e) ein separates zweites Befestigungselement (29-31) zur Befestigung des Aufsetzteils (16) an dem Vorderteil (15), wobei das zweite Befestigungselement (29-31) unabhängig von dem ersten Befestigungselement (22-27) befestigt und gelöst werden kann.

2. Fahrzeug nach Anspruch 1, **dadurch gekennzeichnet, dass** die Aufnahmebohrung zwischen dem Vorderteil (15) und dem Hinterteil (14) für die erste Stange (4, 5, 7, 8) eine Sackbohrung ist.

3. Fahrzeug nach Anspruch 2, **dadurch gekennzeichnet,**
a) **dass** das Hinterteil (14) einen Boden (34) für die Sackbohrung der ersten Stange (3-9) bildet, und/oder
b) **dass** der Boden (34) an dem Hinterteil (14) einstückig angeformt ist, und/oder
c) **dass** der Boden (34) den lichten Querschnitt der Sackbohrung für die erste Stange (4, 5, 7, 8) im Wesentlichen vollständig ausfüllt.

4. Fahrzeug nach Anspruch 1, **dadurch gekennzeichnet, dass** die Aufnahmebohrung zwischen dem Vorderteil (15) und dem Hinterteil (14) für die erste Stange (3, 6, 9) eine Durchgangsbohrung ist.

5. Fahrzeug nach einem der vorhergehenden Ansprüche, **dadurch gekennzeichnet, dass** die Aufnahmebohrung (21) zwischen dem Vorderteil (15) und dem Aufsetzteil (16) für die zweite Stange (2) eine Sackbohrung ist.

6. Fahrzeug nach Anspruch 5, **dadurch gekennzeichnet,**
a) **dass** das Aufsetzteil (16) eine Seitenwand (33) für die Sackbohrung der zweiten Stange (2) bildet, und/oder
b) **dass** die Seitenwand (33) an dem Aufsetzteil (16) einstückig angeformt ist, und/oder
c) **dass** die Seitenwand (33) an dem Aufsetzteil (16) den lichten Querschnitt der Sackbohrung für die zweite Stange (2) im Wesentlichen vollständig ausfüllt.

7. Fahrzeug nach einem der vorhergehenden Ansprüche,
**dadurch gekennzeichnet,**
a) **dass** das erste Befestigungselement (22-27) zur Befestigung des Vorderteils (15) an dem Hinterteil (14) zwei Schrauben (22, 23), zwei Durchgangsbohrungen (24, 25) in dem Vorderteil (15) und zwei Gewindebohrungen 26, 27) in dem Hinterteil (14) aufweist, wobei die beiden Schrauben (22, 23) auf gegenüber liegenden Seiten der Aufnahmebohrung für die erste Stange (3-9) verlaufen, und/oder
b) **dass** das zweite Befestigungselement (29-31) zur Befestigung des Aufsetzteils (16) an dem Vorderteil (15) eine einzige Schraube (29), eine Durchgangsbohrung (30) in dem Aufsetzteil (16) und eine Gewindebohrung (31) in dem Vorderteil (15) aufweist, wobei die Schraube (29) in die Gewindebohrung (31) in dem Vorderteil (15) eingeschraubt ist, und/oder
c) **dass** das Aufsetzteil (16) im montierten Zustand das erste Befestigungselement abdeckt (22, 27), welches das Vorderteil (15) an dem Hinterteil (14) befestigt, und/oder
d) **dass** die erste Stange (3, 6, 9) und die zweite Stange (2) einander kreuzen, und/oder
e) **dass** die erste Stange (3-9) im Wesentlichen vertikal verläuft, und/oder
f) **dass** die zweite Stange (2) im Wesentlichen horizontal verläuft, und/oder
g) **dass** das Verbindungselement (10-13) reibschlüssig mit der ersten Stange (3-9) verbunden ist, und/oder
h) **dass** das Verbindungselement (10-13) reibschlüssig mit der zweiten Stange (2) verbunden ist, und/oder
i) **dass** zwischen dem Vorderteil (15) und dem Hinterteil (14) ein Luftspalt (28) eingeschlossen ist, um das Vorderteil (15) mit dem Hinterteil (14) zusammenpressen zu können, und/oder
j) **dass** zwischen dem Aufsetzteil (16) und dem Vorderteil (15) ein Luftspalt (32) eingeschlossen ist, um das Aufsetzteil (16) und das Vorderteil (15) zusammenpressen zu können, und/oder
k) **dass** das Hinterteil (14), das Vorderteil (15) und/oder das Aufsetzteil (16) aus Metall bestehen, insbesondere aus Stahl oder aus einer Aluminiumlegierung, und/oder
l) **dass** die Aufnahmeschalen (17-20) im Wesentlichen Halbschalen sind, welche die erste Stange (3-9) bzw. die zweite Stange (2) über einen Umfangswinkel von 170°-190° oder 175°-185° umfassen.

8. Fahrzeug nach einem der vorhergehenden Ansprüche, **dadurch gekennzeichnet, dass** das Verbindungselement (10-13) wahlweise konfigurierbar ist für:
a) eine kreuzförmige Verbindung, bei der die erste Stange (6) im Wesentlichen vertikal verläuft und von oben nach unten durch das Verbindungselement (11) hindurchgeht, während die zweite Stange (2) im Wesentlichen horizontal verläuft und von links nach rechts durch das Verbindungselement (11) hindurchgeht, und/oder
b) eine T-förmige Verbindung, bei der die erste Stange (9) im Wesentlichen vertikal verläuft und von oben nach unten durch das Verbindungselement (13) hindurchgeht, während die zweite Stange (2) im Wesentlichen horizontal verläuft und von links kommend in dem Verbindungselement (13) endet, und/oder
c) eine T-förmige Verbindung, bei der die erste Stange (3) im Wesentlichen vertikal verläuft und von oben nach unten durch das Verbindungselement (12) hindurchgeht, während die zweite Stange (2) im Wesentlichen horizontal verläuft und von rechts kommend in dem Verbindungselement (12) endet, und/oder
d) eine T-förmige Verbindung, bei der die erste Stange (4, 5, 7, 8) im Wesentlichen vertikal verläuft und von oben kommend in dem Verbindungselement (10) endet, während die zweite Stange (2) im Wesentlichen horizontal verläuft und von links nach rechts durch das Verbindungselement (10) hindurchgeht, und/oder
e) eine T-förmige Verbindung, bei der die erste Stange im Wesentlichen vertikal verläuft und von unten kommend in dem Verbindungselement endet, während die zweite Stange im Wesentlichen horizontal verläuft und von links nach rechts durch das Verbindungselement hindurchgeht.

9. Fahrzeug nach Anspruch 8, **dadurch gekennzeichnet, dass** das Verbindungselement (10-13) umkonfigurierbar ist durch Austausch des Hinterteils (14) und/oder durch Austausch des Aufsetzteils (16).

10. Fahrzeug nach einem der vorherigen Ansprüche, **gekennzeichnet durch**
a) eine kreuzförmige Verbindung, bei der die erste Stange (6) im Wesentlichen vertikal verläuft und von oben nach unten durch das Verbindungselement (11) hindurchgeht, während die zweite Stange (2) im Wesentlichen horizontal verläuft und von links nach rechts durch das Verbindungselement (11) hindurchgeht, oder
b) eine T-förmige Verbindung, bei der die erste Stange (9) im Wesentlichen vertikal verläuft und von oben nach unten durch das Verbindungselement (13) hindurchgeht, während die zweite Stange (2) im Wesentlichen horizontal verläuft und von links kommend in dem Verbindungselement (13) endet, oder
c) eine T-förmige Verbindung, bei der die erste Stange (3) im Wesentlichen vertikal verläuft und von oben nach unten durch das Verbindungselement (12) hindurchgeht, während die zweite Stange (2) im Wesentlichen horizontal verläuft und von rechts kommend in dem Verbindungselement (12) endet, oder
d) eine T-förmige Verbindung, bei der die erste Stange (4, 5, 7, 8) im Wesentlichen vertikal verläuft und von oben kommend in dem Verbindungselement (10) endet, während die zweite Stange (2) im Wesentlichen horizontal verläuft und von links nach rechts durch das Verbindungselement (10) hindurchgeht, oder
e) eine T-förmige Verbindung, bei der die erste Stange im Wesentlichen vertikal verläuft und von unten kommend in dem Verbindungselement endet, während die zweite Stange im Wesentlichen horizontal verläuft und von links nach rechts durch das Verbindungselement hindurchgeht.

## Claims

1. Vehicle for conveying passengers, in particular a bus, having a holding rail arrangement (1) having a first, preferably substantially vertical holding rail (3-9), a second, preferably substantially horizontal holding rail (2) and a connecting element (10-13), which connects the first holding rail (3-9) to the second holding rail (2), wherein the connecting element (10-13) has:
a) a rear part (14) having a receiving shell (17) for receiving the first rail (3-9),
b) a front part (15) having
b1) a rear receiving shell (18), facing the rear part (14), for receiving the first rail (3-9) so that the front part (15) and the rear part (14) form a receiving bore for the first rail (3-9) with their mutually facing receiving shells (17, 18), and
b2) a front receiving shell (19), facing away from the rear part (14), for receiving the second rail (2),
c) a first fastening element (22-27) for fastening the front part (15) on the rear part (14), and
d) an attachment part (16) for attachment to the front part (15), having a receiving shell (20), facing the front part (15), for receiving the second rail (2) so that the attachment part (16) and the front part (15) form a receiving bore (21) for the second rail (2) with their mutually facing receiving shells (19, 20),
e) a separate second fastening element (29-31) for fastening the attachment part (16) on
the front part (15), wherein the second fastening element (29-31) can be fastened and released independently of the first fastening element (22-27).

2. Vehicle according to Claim 1, **characterized in that** the receiving bore between the front part (15) and the rear part (14) for the first rail (4, 5, 7, 8) is a blind bore.

3. Vehicle according to Claim 2, **characterized in that**
a) the rear part (14) forms a base (34) for the blind bore of the first rail (3-9), and/or
b) the base (34) is integrally formed in one piece on the rear part (14), and/or
c) the clear cross-section of the blind bore for the first rail (4, 5, 7, 8) is filled substantially completely by the base (34).

4. Vehicle according to Claim 1, **characterized in that** the receiving bore between the front part (15) and the rear part (14) for the first rail (3, 6, 9) is a through bore.

5. Vehicle according to one of the preceding claims, **characterized in that** the receiving bore (21) between the front part (15) and the attachment part (16) for the second rail (2) is a blind bore.

6. Vehicle according to Claim 5, **characterized in that**
a) the attachment part (16) forms a side wall (33) for the blind bore of the second rail (2), and/or
b) the side wall (33) is integrally formed in one piece on the attachment part (16), and/or
c) the clear cross-section of the blind bore for the second rail (2) is filled substantially completely by the side wall (33) on the attachment part (16).

7. Vehicle according to one of the preceding claims, **characterized in that**
a) the first fastening element (22-27) for fastening the front part (15) on the rear part (14) has two screws (22, 23), two through bores (24, 25) in the front part (15) and two threaded bores (26, 27) in the rear part (14), wherein the two screws (22, 23) extend on opposite sides of the receiving bore for the first rail (3-9), and/or
b) the second fastening element (29-31) for fastening the attachment part (16) on the front part (15) has a single screw (29), a through bore (30) in the attachment part (16) and a threaded bore (31) in the front part (15), wherein the screw (29) is screwed into the threaded bore (31) in the front part (15), and/or
c) the attachment part (16) in the assembled state covers the first fastening element (22, 27), which fastens the front part (15) on the rear part (14), and/or
d) the first rail (3, 6, 9) and the second rail (2) cross one another, and/or
e) the first rail (3-9) extends substantially vertically, and/or
f) the second rail (2) extends substantially horizontally, and/or
g) the connecting element (10-13) is connected to the first rail (3-9) with friction locking, and/or
h) the connecting element (10-13) is connected to the second rail (2) with friction locking, and/or
i) an air gap (28) is enclosed between the front part (15) and the rear part (14) to enable the front part (15) and the rear part (14) to be pressed together, and/or
j) an air gap (32) is enclosed between the attachment part (16) and the front part (15) to enable the attachment part (16) and the front part (15) to be pressed together, and/or
k) the rear part (14), the front part (15) and/or the attachment part (16) are made of metal, in particular steel or an aluminium alloy, and/or
l) the receiving shells (17-20) are substantially half shells which surround the first rail (3-9) or the second rail (2) over a circumferential angle of 170°-190° or 175°-185°.

8. Vehicle according to one of the preceding claims, **characterized in that** the connecting element (10-13) can be optionally configured for:
a) a cross-shaped connection, in which the first rail (6) extends substantially vertically and passes through the connecting element (11) from top to bottom, whilst the second rail (2) extends substantially horizontally and passes through the connecting element (11) from left to right, and/or
b) a T-shaped connection, in which the first rail (9) extends substantially vertically and passes through the connecting element (13) from top to bottom, whilst the second rail (2) extends substantially horizontally and, coming from the left, ends in the connecting element (13), and/or
c) a T-shaped connection, in which the first rail (3) extends substantially vertically and passes through the connecting element (12) from top to bottom, whilst the second rail (2) extends substantially horizontally and, coming from the right, ends in the connecting element (12), and/or
d) a T-shaped connection, in which the first rail (4, 5, 7, 8) extends substantially vertically and, coming from the top, ends in the connecting element (10), whilst the second rail (2) extends substantially horizontally and passes through the connecting element (10) from left to right, and/or
e) a T-shaped connection, in which the first rail extends substantially vertically and, coming from the bottom, ends in the connecting element, whilst the second rail extends substantially horizontally and passes through the connecting element from left to right.

9. Vehicle according to Claim 8, **characterized in that** the connecting element (10-13) can be reconfigured by replacing the rear part (14) and/or by replacing the attachment part (16).

10. Vehicle according to one of the preceding claims, **characterized by**
a) a cross-shaped connection, in which the first rail (6) extends substantially vertically and passes through the connecting element (11) from top to bottom, whilst the second rail (2) extends substantially horizontally and passes through the connecting element from left to right, or
b) a T-shaped connection, in which the first rail (9) extends substantially vertically and passes through the connecting element (13) from top to bottom, whilst the second rail (2) extends substantially horizontally and, coming from the left, ends in the connecting element (13), or
c) a T-shaped connection, in which the first rail (3) extends substantially vertically and passes through the connecting element (12) from top to bottom, whilst the second rail (2) extends substantially horizontally and, coming from the right, ends in the connecting element (12), or
d) a T-shaped connection, in which the first rail (4, 5, 7, 8) extends substantially vertically and, coming from the top, ends in the connecting element (10), whilst the second rail (2) extends substantially horizontally and passes through the connecting element (10) from left to right, or
e) a T-shaped connection, in which the first rail extends substantially vertically and, coming from the bottom, ends in the connecting element, whilst the second rail extends substantially horizontally and passes through the connecting element from left to right.

## Revendications

1. Véhicule pour le transport de personnes, en particulier bus, présentant un agencement de barres de retenue (1) présentant une première barre de retenue (3-9) de préférence essentiellement verticale, une deuxième barre de retenue (2) de préférence essentiellement horizontale et un élément de liaison (10-13) qui relie la première barre de retenue (3-9) à la deuxième barre de retenue (2), l'élément de liaison (10-13) présentant :
a) une partie arrière (14) avec une coque de réception (17) pour recevoir la première barre (3-9),
b) une partie avant (15) avec
b1) une coque de réception arrière (18) tournée vers la partie arrière (14) pour recevoir la première barre (3-9), de telle sorte que la partie avant (15) et la partie arrière (14) forment avec leurs coques de réception tournées l'une vers l'autre (17, 18), un alésage de réception pour la première barre (3-9), et
b2) une coque de réception avant (19) opposée à la partie arrière (14) pour recevoir la deuxième barre (2),
c) un premier élément de fixation (22-27) pour la fixation de la partie avant (15) à la partie arrière (14), et
d) une partie de pose (16) destinée à être posée sur la partie avant (15) avec une coque de réception (20) tournée vers la partie avant (15) pour recevoir la deuxième barre (2) de telle sorte que la partie de pose (16) et la partie avant (15) forment, avec leurs coques de réception (19, 20) tournées l'une vers l'autre, un alésage de réception (21) pour la deuxième barre (2),
e) un deuxième élément de fixation séparé (29-31) pour la fixation de la partie de pose (16) sur la partie avant (15), le deuxième élément de fixation (29-31) pouvant être fixé et détaché indépendamment du premier élément de fixation (22-27).

2. Véhicule selon la revendication 1, **caractérisé en ce que** l'alésage de réception entre la partie avant (15) et la partie arrière (14) pour la première barre (4, 5, 7, 8) est un alésage borgne.

3. Véhicule selon la revendication 2, **caractérisé en ce que**
a) la partie arrière (14) forme un fond (34) pour l'alésage borgne de la première barre (3-9), et/ou
b) le fond (34) est façonné d'une seule pièce au niveau de la partie arrière (14), et/ou
c) le fond (34) remplit essentiellement complètement la section transversale intérieure de l'alésage borgne pour la première barre (4, 5, 7, 8).

4. Véhicule selon la revendication 1, **caractérisé en ce que** l'alésage de réception entre la partie avant (15) et la partie arrière (14) pour la première barre (3, 6, 9) est un alésage traversant.

5. Véhicule selon l'une quelconque des revendications précédentes, **caractérisé en ce que** l'alésage de réception (21) entre la partie avant (15) et la partie de pose (16) pour la deuxième barre (2) est un alésage borgne.

6. Véhicule selon la revendication 5, **caractérisé en ce que**
a) la partie de pose (16) forme une paroi latérale (33) pour l'alésage borgne de la deuxième barre (2), et/ou
b) la paroi latérale (33) est façonnée d'une seule pièce sur la partie de pose (16), et/ou
c) la paroi latérale (33) sur la partie de pose (16) remplit essentiellement complètement la section transversale intérieure de l'alésage borgne pour la deuxième barre (2).

7. Véhicule selon l'une quelconque des revendications précédentes,
**caractérisé en ce que**
a) le premier élément de fixation (22-27) pour la fixation de la partie avant (15) à la partie arrière (14) présente deux vis (22, 23), deux alésages traversants (24, 25) dans la partie avant (15) et deux alésages filetés (26, 27) dans la partie arrière (14), les deux vis (22, 23) s'étendant sur des côtés opposés de l'alésage de réception pour la première barre (3-9), et/ou
b) le deuxième élément de fixation (29-31) pour la fixation de la partie de pose (16) sur la partie avant (15) présente une vis unique (29), un alésage traversant (30) dans la partie de pose (16) et un alésage fileté (31) dans la partie avant (15), la vis (29) étant vissée dans l'alésage fileté (31) dans la partie avant (15), et/ou
c) la partie de pose (16), dans l'état monté, recouvre le premier élément de fixation (22, 27) qui fixe la partie avant (15) à la partie arrière (14), et/ou
d) la première barre (3, 6, 9) et la deuxième barre (2) se croisent mutuellement, et/ou
e) la première barre (3-9) s'étend essentiellement verticalement, et/ou
f) la deuxième barre (2) s'étend essentiellement horizontalement, et/ou
g) l'élément de liaison (10-13) est connecté par engagement par friction à la première barre (3-9), et/ou
h) l'élément de liaison (10-13) est connecté par engagement par friction à la deuxième barre (2), et/ou
i) un entrefer (28) est formé entre la partie avant (15) et la partie arrière (14), afin de pouvoir comprimer la partie avant (15) avec la partie arrière (14), et/ou
j) entre la partie de pose (16) et la partie avant (15) est formé un entrefer (32) afin de pouvoir comprimer la partie de pose (16) et la partie avant (15), et/ou
k) la partie arrière (14), la partie avant (15) et/ou la partie de pose (16) se composent de métal, en particulier d'acier ou d'un alliage d'aluminium, et/ou
l) les coques de réception (17-20) sont essentiellement des demi-coques qui entourent la première barre (3-9) ou la deuxième barre (2) sur un angle d'enveloppement de 170° à 190° ou 175° à 185°.

8. Véhicule selon l'une quelconque des revendications précédentes, **caractérisé en ce que** l'élément de liaison (10-13) peut être configuré de manière sélective pour :
a) une liaison cruciforme dans laquelle la première barre (6) s'étend essentiellement verticalement et passe de haut en bas à travers l'élément de liaison (11), tandis que la deuxième barre (2) s'étend essentiellement horizontalement et passe de gauche à droite à travers l'élément de liaison (11), et/ou
b) une liaison en forme de T dans laquelle la première barre (9) s'étend essentiellement verticalement et passe de haut en bas à travers l'élément de liaison (13), tandis que la deuxième barre (2) s'étend essentiellement horizontalement et se termine dans l'élément de liaison (13) en provenant de la gauche, et/ou
c) une liaison en forme de T dans laquelle la première barre (3) s'étend essentiellement verticalement et passe de haut en bas à travers l'élément de liaison (12), tandis que la deuxième barre (2) s'étend essentiellement horizontalement et se termine dans l'élément de liaison (12) en provenant de la droite, et/ou
d) une liaison en forme de T dans laquelle la première barre (4, 5, 7, 8) s'étend essentiellement verticalement et se termine dans l'élément de liaison (10) en provenant du haut, tandis que la deuxième barre (2) s'étend essentiellement horizontalement et passe de gauche à droite à travers l'élément de liaison (10), et/ou
e) une liaison en forme de T dans laquelle la première barre s'étend essentiellement verticalement et se termine dans l'élément de liaison en provenant du bas, tandis que la deuxième barre s'étend essentiellement horizontalement et passe de gauche à droite à travers l'élément de liaison.

9. Véhicule selon la revendication 8, **caractérisé en ce que** l'élément de liaison (10-13) peut être reconfiguré par remplacement de la partie arrière (14) et/ou par remplacement de la partie de pose (16) .

10. Véhicule selon l'une quelconque des revendications précédentes, **caractérisé par**
a) une liaison cruciforme dans laquelle la première barre (6) s'étend essentiellement verticalement et passe de haut en bas à travers l'élément de liaison (11), tandis que la deuxième barre (2) s'étend essentiellement horizontalement et passe de gauche à droite à travers l'élément de liaison (11), ou
b) une liaison en forme de T dans laquelle la première barre (9) s'étend essentiellement verticalement et passe de haut en bas à travers l'élément de liaison (13), tandis que la deuxième barre (2) s'étend essentiellement horizontalement et se termine dans l'élément de liaison (13) en provenant de la gauche, ou
c) une liaison en forme de T dans laquelle la première barre (3) s'étend essentiellement verticalement et passe de haut en bas à travers l'élément de liaison (12), tandis que la deuxième barre (2) s'étend essentiellement horizontalement et se termine dans l'élément de liaison (12) en provenant de la droite, ou
d) une liaison en forme de T dans laquelle la première barre (4, 5, 7, 8) s'étend essentiellement verticalement et se termine dans l'élément de liaison (10) en provenant du haut, tandis que la deuxième barre (2) s'étend essentiellement horizontalement et passe de gauche à droite à travers l'élément de liaison (10), ou
e) une liaison en forme de T dans laquelle la première barre s'étend essentiellement verticalement et se termine dans l'élément de liaison en provenant du bas, tandis que la deuxième barre s'étend essentiellement horizontalement et passe de gauche à droite à travers l'élément de liaison.
